Europäisches Patentamt

European Patent Office

Office européen des brevets

(19)

(11) Veröffentlichungsnummer: **0 288 951 B1**

(12) # EUROPÄISCHE PATENTSCHRIFT

(45) Veröffentlichungstag der Patentschrift: **02.09.92**

(51) Int. Cl.⁵: **B29C 61/00**, B29C 61/02

(21) Anmeldenummer: **88106570.0**

(22) Anmeldetag: **25.04.88**

(54) **Verfahren und Vorrichtung zum Schrumpfen von Warenbahnen.**

(30) Priorität: **28.04.87 DE 3714101**

(43) Veröffentlichungstag der Anmeldung:
**02.11.88 Patentblatt  88/44**

(45) Bekanntmachung des Hinweises auf die
Patenterteilung:
**02.09.92 Patentblatt  92/36**

(84) Benannte Vertragsstaaten:
**DE FR GB IT NL SE**

(56) Entgegenhaltungen:
**FR-A- 2 287 983**
**GB-A- 592 583**

**JAPANESE PATENT GAZETTE, Woche 6800,
Sektion Ch, Nr. 68-37487O [00], Derwent Publications Ltd, London, GB**

**PATENT ABSTRACTS OF JAPAN, Band 9, Nr.
51 (M-361)[1774], 6. März 1985**

(73) Patentinhaber: **Klemm, Gerhard**
**Am Rehwinkel 37**
**W-4800 Bielefeld 1(DE)**

(72) Erfinder: **Klemm, Gerhard**
**Am Rehwinkel 37**
**W-4800 Bielefeld 1(DE)**

## Beschreibung

Die Erfindung betrifft ein Verfahren und eine Vorrichtung zum Schrumpfen von Warenbahnen, vorzugsweise Kunststoffbahnen, gemäß dem Oberbegriff des Anspruches 1 bzw. 2.

Derartige Verfahren und Vorrichtungen sind an sich bekannt. Die Ausbildung derselben ist derart, daß die jeweilige Warenbahn unmittelbar von der oder den Schrumpfwalzen kommend der Aufwickelwalze zugeführt wird, wobei sie in diesem Zuführungsbereich unter Spannung gehalten wird. Eine derartige Vorrichtung ist beispielsweise durch die US-PS 3.679.791 bekannt.

Der Nachteil dieser vorbekannten Schrumpfmaschinen besteht darin, daß im Grunde genommen der Schrumpfvorgang, nämlich das "Arbeiten" der Ware, nicht abgeschlossen ist, wenn die Ware in einem derart warmen Zustand der Aufwickelwalze zuläuft. Sie kann sich auf dem Weg zwischen der letzten beheizten Schrumpfwalze und der Aufwickelwalze nicht erholen, kann auch nicht genügend Wärme wieder abgeben und gerät in diesem noch "arbeitenden" Zustand auf die Aufwickelwalze. Hier liegt die Ware immer noch unter Spannung und bleibt auch in dieser Verfassung und kann sich erst sehr langsam "setzen". Da die Warenbahn auf der Aufwickelwalze in Schichten übereinander liegt, macht sich die innere Strukturverfassung der Warenbahn mit ihrer Wärmespeicherung und ihrer Spannung bis zur endgültigen Abkühlung und "Setzung" außerordentlich nachteilhaft bemerkbar. Es kommt zu Verschiebungen, Verwerfungen, Wellungen, sogar zu Spannungsrissen und dgl. Für viele Bereiche ist die Warenbahn dann anschließend nicht mehr einsetzbar.

Geschrumpfte Warenbahnen werden für folgende Zwecke benutzt: Gedruckte Schaltungen, Membranschalter, graphische Drucke, deren einzelne Farben sehr genau zueinander oder zu irgendwelchen Markierungen passen müssen, Stanzteile mit hoher Maßgenauigkeit und ähnliche Teile.

Die Aufgabe der vorliegenden Erfindung besteht somit darin, ein Verfahren und eine Vorrichtung zum Schrumpfen von Warenbahnen zu schaffen bei der die Möglichkeit gegeben ist, daß sich die Warenbahn auf dem Weg von der letzten Schrumpfwalze her kommend, bis zur Aufwickelwalze hin gehend erholt, und relativ abgekühlt und ruhiggestellt der Aufwickelwalze zugeführt wird.

Diese Aufgabe wird durch die im Anspruch 1 bzw. 2 aufgeführten Merkmale gelöst.

Die Warenbahn, die im Schrumpfbereich unter Spannung steht, wird aus dieser entlassen, erneut unter Spannung genommen, und unter Spannung aufgewickelt.

Dadurch ist erzielt, daß der Warenbahn die Möglichkeit gegeben wird, nach Verlassen der letzten Schrumpfwalze sämtliche inneren Spannungen abzugeben einschließlich auch der vorhandenen Übertemperatur und sich zu regenerieren, so daß sie in absolut ruhiger Verfassung und auch schon relativ stark abgekühlt aufgewickelt werden kann. Die derart aufgewickelte Ware "arbeitet" somit auf der Wickelwalze nur noch minimal oder gar nicht mehr.

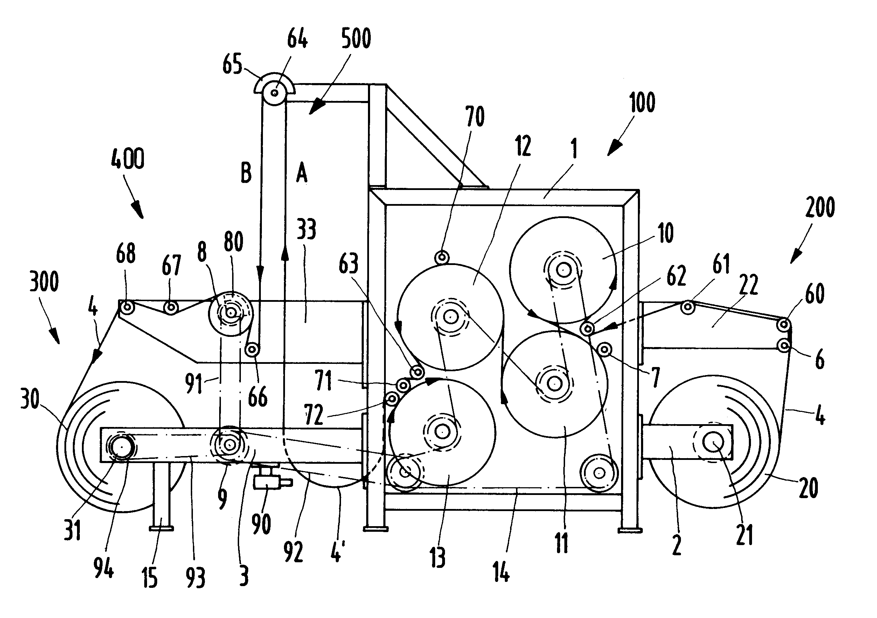

In der Zeichnung ist ein Ausführungsbeispiel der Erfindung dargestellt und zwar zeigt die Figur eine Seitenansicht der Maschine.

In einem Gestell 1 befindet sich eine Anzahl von Schrumpfwalzen 10, 11, 12, 13, die auf beliebiger an sich bekannter Art und Weise aufgeheizt werden.

Dem Gestell 1 vorgeordnet ist eine Halterung 2 mit einer Abwickelwalze 20 und deren Kern 21. Dem Gestell 1 nachgeordnet ist eine verlängerte Halterung 3 mit Aufwickelwalze 30 und ihrem Kern 31. Die Warenbahn 4 wird somit vom Bereich der Abwickelwalze 20 als Abwickelstation 200 kommend durch das Gestell 1 hindurch geführt, in dem die Wärmebeaufschlagung dadurch erfolgt, daß die Warenbahn 4 die Schrumpfwalzen 10, 11, 12, 13, überläuft und im Schrumpfbereich 100 ihre Bearbeitung erfährt. Sie wird dann der Aufwickelstation 300 zugeführt. Somit besteht die Vorrichtung aus dem Abwickelbereich 200, dem Schrumpfbereich 100 und dem Aufwickelbereich 300, wobei zwischen dem Schrumpfbereich 100 und dem Aufwickelbereich 300 ein Aushänge- und Ruhebereich 500 vorgesehen ist.

Die von der Abwickelwalze 20 kommende Warenbahn 4 gerät über Führungsrollen 6, 60, 61, in die Wärmezone des Schrumpfbereiches innerhalb des Gestelles 1 und wird hier weiter über eine Führungsrolle 62 der Schrumpfwalze 10 zugeführt, die die Warenbahn 4 anschließend an die Schrumpfwalze 11 abgibt, wobei der Abstand relativ klein gehalten ist. Eine Andrückwalze 7 gewährleistet den einwandfreien Übergang und gleichzeitig, daß keine Lufteinschlüsse auf dem Warenbahnweg weiter von ihr mitgenommen werden. Von der Schrumpfwalze 11 kommend gerät die Warenbahn 4 auf die Schrumpfwalze 12 und weiter unter die Andrückwalze 70, über eine Führungsrolle 63 zu einer Andrückrolle 71 die die Warenbahn an die Schrumpfwalze 13 abgibt. Nachdem die Warenbahn fast um 360° die Schrumpfwalze 13 umlaufen hat, wird sie von einer Andrückwalze 72 mitgenommen, wobei diese als letztes Bahnführungsmittel 72 angesehen werden muß, das an der letzten Schrumpfwalze 13 anliegt die Spannung noch hält, aber danach die Warenbahn 4 abwärtslaufend frei gibt. Im Aushänge- und Ruhebereich der vorrichtungsmäßig durch Verlängerung der jeweiligen Gestellteile ausgebildet ist, hängt die Warenbahn 4 in einer freihängenden Schlaufe 4'. Das die Bahn weiterführende relativ hochgestellte Bahnführungsmittel 64 nimmt die Bahn, die von unten kommt auf. Im vorliegenden Fall handelt es sich um ein Rohr, das zur Glättung der Warenbahn mit einer Seitenführung 65 versehen ist. Die Bahn wird im vertikalen Lauf gemäß Pfeilrichtung A aufgenommen und im abwärtsführenden Lauf B parallel zum Schenkel A der Bahnführung wieder freigegeben immer noch spannungslos. Sie geht anschließend zu einer Transportwalze 8, auf einem zur Überbrückung des Aushängebereiches verlängerten Tragarm 33, oberhalb der verlängerten Halterung 3, die durch eine Stütze 15 zum Boden hin abgestützt ist, um die Aufwickelwalze zu stützen. Die Transportwalze 8 kann gemäß dem deutschen Patent 2 812 099 ausgebildet sein, also im Inneren ein Saugsegment 80 haben. Sie wird aber im allgemeinen nicht im Zweiphasenvorzug die Warenbahn transportieren, sondern von einem Antrieb 9 aus, der über eine Lichtschranke oder dgl. oder ein anderes Kontrollgerät 90 gesteuert wird. Ein Kettentrieb 91 geht vom Antrieb 9 zur Transportwalze 8, wesentlich ist, daß die Walze 8 die Bahn festhält und geregelt transportiert, damit von hier aus die Bahn wieder unter Spannung genommen werden kann. Der Transportwalze 8 vor- und nachgeschaltet sind Führungsrollen 66, 67, 68 die, da die Warenbahn im Zickzack geführt wird, einerseits gewährleisten, daß die Transportwalze 8 in dem Bereich derart überlaufen wird, daß das Saugsegment 80 wirksam ist und die Bahn festhalten kann und andererseits, daß die Warenbahn 4 entsprechend den angegebenen Pfeilrichtungen glatt und gespannt der Aufwickelwalze 30 zugeführt wird. Der Aufwickelwalze 30 ist somit eine Vorstrecke zum Spannungsaufbau 400 vorgeschaltet, wodurch eine einwandfreie Aufwicklung gewährleistet ist.

Um einen gleichmäßigen Antrieb der Schrumpfwalzen 10, 11, 12, 13 zu gewährleisten, können diese mit einem Kettentrieb 14 miteinander verbunden sein. Dieser Kettentrieb kann wiederum über entsprechende Getriebemittel 92 beispielsweise eine Kette und Kupplung ihren Antrieb erfahren. Eine weitere Kette 93 führt vom Antrieb 9 zum Antriebszahnrad 94 im Bereich des Kernes 31 der Aufwickelwalze 30, so daß der Kern 31 mitgenommen wird.

Wesentlich ist somit, daß die Abwickelvorrichtung mit ihrer Abwickelzone die Warenbahn gleichmäßig der Wärmezone bzw. dem Schrumpfbereich 100 zuführt, wonach dann die Warenbahn 4 in den Aushänge- und Ruhebereich 500 einläuft, - freihängend in einer Warenbahnschlaufe 4', -und anschließend über eine Transportvorrichtung mit Transportwalze 8 der Aufwickelstation 300 zugeführt wird.

Wie nun die Tragarme 22 und 33 im Bereich der Abwickelwalze 20 und der Aufwickelwalze 30 jeweils nach- und vorgeordnet liegend, ausgebildet sind, ist jeweils je nach Konstruktion der Vorrichtung variabel. Wesentlich ist, daß der Tragarm 33 groß genug gewählt wird, um einen genügenden Platz für die Aushänge- und Ruhebereich 500 zu gewährleisten. Zwischen der oder den Schrumpfwalzen 11 bis 13 und der Aufwickelwalze 30 muß zur Bildung einer freifallenden Warenbahnschlaufe 4' ein in horizontaler Richtung liegender Abstand zweier Bahnführungsmittel 72-64, wie Rohre, Walzenumlenkvorrichtungen oder dgl. - voneinander vorgesehen sein. Nur dann ist es möglich, eine freifallende unbehinderte Warenbahnschlaufe 4' zu bilden und die Warenbahn sich wirklich aushängen zu lassen, ehe sie aufgespult wird.

Die Ausbildung der Vorrichtung ist, wie bereits erwähnt, variabel. Es ist nicht entscheidend, wie viele Schrumpfwalzen 10, 11, 12, 13 im Schrumpfbereich 100 vorgesehen sind. Es können auch mehrere Schrumpfstationen hintereinander vorgesehen sein. Wesentlich ist, daß vor der Aufwickelung der Warenbahn auf die Aufwickelwalze bzw. deren Kern 31, die Warenbahn die Möglichkeit hat zu regenerieren, d.h. sich wirklich frei auszuhängen. Bei mehreren Schrumpfstationen wird jeweils nach der Wärmezone eine derartige Ruhezone mit einer Warenbahnschlaufe nachgeschaltet, um dann zum Schluß der Aufwickelwalze zugeführt zu werden.

Es ist somit möglich, in aufeinander folgenden Schritten, das Verfahren durchzuführen; die Warenbahn, also ein bestimmtes Produkt kommt nach der Andrückung an die letzte Schrumpfwalze aus der Maschine, läuft spannungsfrei in die Schlaufe ein, beruhigt sich, wird aufgefangen und erhält anschließend Spannung im Weiterlaufbereich und wird anschließend unter Spannung aufgewickelt. Die Ausbildung der Vorrichtung, um diese Arbeitsschritte durchzuführen, ist somit in der Konstruktion variabel.

Vorteilhaft ist es, die Schrumpfwalzen mit einer Zwei-Temperaturstufenschaltung zu versehen, so daß sie den Bedürfnissen aller möglichen Materialien angepaßt werden können, und ganz nach Wunsch erwärmbar sind.

**Patentansprüche**

1. Verfahren zum Schrumpfen von Warenbahnen vorzugsweise Kunststoffbahnen mittels Kontaktschrumpfung unter Spannung und anschließender Aufwicklung, **dadurch gekennzeichnet,** daß zwischen dem heißen Schrumpfbereich (100) und dem die Warenbahn wieder unter Spannung nehmende Aufwickelbereich (300) von ihr eine freihängende und unbehindert freifallende Schlaufe in einem Aushänge- und Ruhebereich (500) gebildet wird, so daß die unter Spannung geführte Warenbahn aus dem Schrumpfbereich (100) herausgeführt wird, anschließend spannungsfrei in die Schlaufe (4') einläuft, sich in dieser beruhigt, anschließend im Ablauf aus dem Schlaufenbereich wieder unter Spannung gesetzt und unter Spannung aufgewickelt wird.

2. Vorrichtung zum Schrumpfen von Warenbahnen vorzugsweise Kunststoffbahnen, bestehend aus mindestens einer beheizten Schrumpfwalze und einer Aufwickelwalze, dadurch gekennzeichnet, daß zwischen der Schrumpfvorrichtung (1,10,11,12,13) und der Aufwickelvorrichtung (30,31) bzw. eines weiteren Bahnführungsmittels (64) eine Aushänge- und Ruhevorrichtung für die frei im Raum geführte unbehinderte Warenbahn vorgesehen ist.

3. Vorrichtung nach Anspruch 2, dadurch gekennzeichnet, daß zwischen der oder den Schrumpfwalzen (10,11,12,13) und der Aufwickelwalze (30) zur Bildung einer unbehindert freifallenden Warenbahnschlaufe (4') ein in horizontaler Richtung liegender Abstand zweier Bahnführungsmittel, wie Rohre, Walzen, Umlenkvorrichtung oder dgl. (72,64) voneinander vorgesehen ist, wobei das Bahnführungsmittel (72) an der letzten Schrumpfwalze (13) die unbehindert freifallende Warenbahn (4) freigibt und das die Bahn weiterführende Bahnführungsmittel (64) die freizulaufende Warenbahn von unten kommend aufnimmt.

4. Vorrichtung nach einem oder mehreren der Ansprüche 2 und 3 dadurch gekennzeichnet, daß zwischen der Vorrichtung zur Bildung des Warenbahn- Aushänge und Ruhebereiches (500) und der Aufwickelvorrichtung (30) sowie dem die Bahn weiterführenden Bahnführungsmittel (64) eine Spannvorrichtung (8,67,68) für die Warenbahn vorgesehen ist.

5. Vorrichtung nach Anspruch 4, dadurch gekennzeichnet, daß die Spannvorrichtung derart ausgebildet ist, daß die Warenbahn im Zickzack über Walzen (66,8,67,68) führbar ist.

6. Vorrichtung nach einem oder mehreren der Ansprüche 2 bis 5, dadurch gekennzeichnet, daß im unteren Umführungsbereich der Warenbahnschlaufe ein Kontrollgerät (90) vorgesehen ist, das mindestens mit einem Antriebsmittel (9,8,94,92) für den Transport der Warenbahn verbunden ist.

7. Vorrichtung nach einem oder mehreren der Ansprüche 2 bis 6, dadurch gekennzeichnet, daß zur Abstandhaltung zwischen Schrumpfvorrichtung im Gestell (1) und Bahnführungsmittel (64) eine Halterung (3) für die Aufwickelwalze (30) und ein Tragarm (33) für die Warenbahnspannmittel (66,8,67,68) verlängert ausgebildet sind und die Halterung (3) für die Wickelwalze (33) durch eine Stütze (15) zum Boden hin abgestützt ist.

8. Vorrichtung nach einem oder mehreren der Ansprüche 3 bis 7, dadurch gekennzeichnet, daß die Transportwalze (8) mit einem Saugsegment (80) versehen ist, zur taktweisen, zeitweiligen Freigabe und zum Festhalten der Warenbahn bei schrittweise erfolgendem Weitertransport derselben.

9. Vorrichtung nach einem oder mehreren der Ansprüche 3 bis 8, dadurch gekennzeichnet, daß als Bahnführungsmittel (64) ein Rohr vorgesehen ist mit Seitenführungen (65).

10. Vorrichtung nach einem oder mehreren der Ansprüche 3 bis 9, dadurch gekennzeichnet, daß die Schrumpfwalzen in Zwei-Temperaturstufenschaltungen erwärmbar sind.

**Claims**

1. Process for shrinking product webs, preferably plastic webs by means of contact shrinking under tension and subsequent winding, *characterized by the fact* that between the hot shrinking area (100) and the winding area (300) re-exerting tension on the product webs a freehanging and unhindered free-falling loop is formed in a suspension and rest area (500) so that the product web under tension is directed out of the shrink area (100), subsequently runs free of tension into the loop (4'), rests inside this, is then put back under tension while passing out of the loop area and is wound under tension.

2. Device for shrinking product webs, preferably plastic webs, consisting of at least one heated shrink roller and one winding roller, characterized by the fact that a suspension and resting device is fitted between the shrinking device (1,10,11,12,13) and the winding device (30,31) or additional web guide (64), for the product web directed freely and unhindered into the space.

3. Device according to claim 2, characterized by the fact that between the shrink roller(s) (10,11,12,13) and the winding roller (30) there is a space in the horizontal direction between two web guides, such as pipes, rollers, redirection device or the like (72,64) in order to form an unhindered, free-falling web loop (4'), whereby the web guide (72) at the last shrink roller (13) releases the unhindered, free-falling web (4) and the web guide (64) for continued transport of the web takes up the web from below.

4. Device according to one or several of claims 2 and 3, characterized by the fact that a tensioning device (8,67,68) is fitted between the device for forming the web suspension and rest area (500) and the winding device (30) and the guide (64) directing the web.

5. Device according to claim 4, characterized by the fact that the tensioning device is formed in such a way that the web can be guided in zigzag fashion over rollers (66,8,67,68).

6. Device according to one or several of claims 2 to 5, characterized by the fact, that a control device (90) is provided for the lower area of the web loop, which is connected to at least one of the transport devices (9,8,94,92) for the transport of the product web.

7. Device according to one or several of claims 2 to 6, characterized by the fact that in order to maintain the distance between the shrink device in the frame (1) and the web guide (64) a bracket (3) for the winding roller (30) and a carrier arm (33) for the web tensioners (66,8,67,68) are provided in extended form, and the bracket (3) for the winding roller (33) is supported down to the floor by a prop (15).

8. Device according to one or several of claims 3 to 7, characterized by the fact that the transport roller (8) is fitted with an induction segment (80) for cyclic, periodic release and for holding the web in step-oriented further transport of the same.

9. Device according to one or several of claims 3 to 8, characterized by the fact that a pipe with lateral guides (85) is used as the web guide (64).

10. Device according to one or several of claims 3 to 8, characterized by the fact that the shrink rollers can be heated in two temperature stage switchings.

**Revendications**

1. Procédé de rétrécissement de feuilles par contract, de préférence de feuilles en matière plastique, thermocontractées sous tension puis enroulées, *caractérisé en ce qu'*entre la zone de rétrécissement (100) et la zone d'enroulement (30) retensionnant la feuille, cette dernière forme une boucle en suspension libre et pouvant tomber librement dans une zone de suspension et de stabilisation (500), de sorte que la feuille guidée sous tension sort guidée de la zone de rétrécissement (100), pénètre ensuite hors tension dans la boucle (4'), se stabilise dans celle-ci, est retensionnée à la sortie de la zone de bouclage puis enroulée sous tension.

2. Dispositif de rétrécissement de feuilles, de préférence de feuilles en matière plastique, comprenant au moins un rouleau thermocontracteur chauffé et un rouleau d'enroulement, caractérisé en ce qu'entre le dispositif thermocontracteur (1, 10, 11, 12, 13) et le dispositif enrouleur (30, 31) ou un autre moyen de guidage (64) de la feuille, un dispositif de suspension et de stabilisation est prévu pour les feuilles guidées librement dans l'espace et sans obstacle.

3. Dispositif selon revendication 2, caractérisé en ce qu'entre le ou les rouleaux thermocontracteurs (10, 11, 12, 13) et le rouleau enrouleur (30) permettant la formation d'une boucle de feuille (4') tombant sans obstacle, un écart est prévu dans le sens horizontal entre deux moyens de guidage de feuille tels des tubes, rouleaux, dispositif de renvoi ou assimilés (72, 64), le moyen de guidage de feuille (72) libérant, au niveau du dernier rouleau thermocontracteur (13), la feuille qui tombe librement (4) et le moyen (64) de poursuite du guidage de feuille recevant par dessous la feuille qui arrive librement.

4. Dispositif selon les revendications 2 et/ou 3, caractérisé en ce qu'entre le dispositif formant la zone de suspension et de stabilisation (500) de la feuille et le dispositif d'enroulement (30) ainsi qu'entre ce dispositif (500) et le dispositif (64) de poursuite du guidage de la feuille, un dispositif (8, 67, 68) de tensionnement de la feuille est prévu.

5. Dispositif selon la revendication 4, caractérisé en ce que le dispositif tensionneur est conformé de telle sorte que la feuille soit guidable en zigzag par les rouleaux (66, 8, 67, 68).

6. Dispositif selon une ou plusieurs des revendications 2 à 5, caractérisé en ce que dans la zone inférieure de déviation de la boucle de feuille un appareil de contrôle (90) est prévu, relié à au moins un moyen d'entraînement (9, 8, 94, 92) assurant le transport de la feuille.

7. Dispositif selon une ou plusieurs des revendications 2 à 6, caractérisé en ce que pour maintenir l'écart entre le dispositif thermocontracteur dans le châssis (1) et le moyen de guidage (64) de al feuille, une fixation (3) du rouleau enrouleur (30) et un brassupport (33) des moyens tensionneurs de feuille (66, 8, 67, 68) sont de forme rallongée et la fixation (3) du rouleau enrouleur (30) est soutenue depuis le sol via un étai (15).

8. Dispositif selon une ou plusieurs des revendications 3 à 7, caractérisé en ce que le rouleau transporteur (8) est doté d'une segment aspirateur (80) permettant la libération cadencée et temporaire et la retenue de la feuille tandis que la poursuite du transport de celle-ci a lieu pas à pas.

9. Dispositif selon une ou plusieurs des revendications 3 à 8, caractérisé en ce qu'un tuyau (64) à guides latéraux (65) est prévu comme moyen de guidage de la feuille.

10. Dispositif selon une ou plusieurs des revendications 3 à 9, caractérisé en ce que les rouleaux thermocontracteurs sont chauffables par deux circuits à étagement de chaleur.

EP 0 288 951 B1